# EUROPÄISCHE PATENTSCHRIFT

(11) **EP 2 496 436 B1**
(45) Veröffentlichungstag und Bekanntmachung des Hinweises auf die Patenterteilung: **18.04.2018**
(21) Anmeldenummer: 10778955.4
(22) Anmeldetag: 03.11.2010
(51) Int. Cl.: B60L 11/18, H02J 7/02, H02J 7/34

(54) **LADESYSTEM FÜR ELEKTROFAHRZEUGE**
CHARGING SYSTEM FOR ELECTRIC VEHICLES
SYSTÈME DE CHARGE POUR VÉHICULES ÉLECTRIQUES

(30) Priorität: 05.11.2009 DE 102009046422
(43) Veröffentlichungstag der Anmeldung: 12.09.2012
(73) Patentinhaber: Schneider, Daniel, 79254 Oberried (DE); Wick, Thomas, 4229 Beinwil (CH)
(72) Erfinder: SCHNEIDER, Daniel, 79254 Oberried (DE); WICK, Thomas, 4229 Beinwill (CH); MARTIN, Gilles, 68390 Sausheim (FR)
(74) Vertreter: Wolf, Eckhard
(86) Internationale Anmeldenummer: PCT/EP2010/066706
(87) Internationale Veröffentlichungsnummer: WO 2011/054849

(56) Entgegenhaltungen:
- EP-A1- 2 058 894
- WO-A1-2005/009779
- WO-A1-2009/042214
- DE-A1- 4 442 825
- DE-A1- 10 259 585
- US-A- 6 088 250
- US-A1- 2004 130 292

## Beschreibung

Die Erfindung betrifft ein Ladesystem für Elektrofahrzeuge mit einer eingangsseitig über eine Anschlussstelle an ein Wechselstromnetz anschließbaren, einen AC/DC-Wandler aufweisenden Netzladestufe, mit einer mikroprozessorgestützten Steuereinrichtung zur Überwachung eines Ladevorgangs und mit mindestens einem ausgangsseitigen Ladeanschluss, der zeitweilig mit einem Fahrzeugakkumulator verbindbar ist.

Ladesysteme dieser Art, die auch als Stromtankstelle oder Elektrotankstelle bezeichnet werden, sind primär dazu bestimmt, den zumindest teilweise entladenen Akkumulator eines Elektrofahrzeugs aufzuladen. Die Elektrofahrzeuge enthalten zu diesem Zweck üblicherweise ein Netzladegerät, das mit einer Kabelverbindung an eine Steckdose des öffentlichen Stromnetzes angeschlossen werden kann. Mittlerweile gibt es vermehrt Stromtankstellen mit Drehstromanschluss, damit entweder mehrere Fahrzeuge gleichzeitig oder ein Fahrzeug beschleunigt geladen werden kann. Die Stecker und die Kabelverbindungen entsprechen dabei den üblichen Normen für elektrische Geräte. Auch mit den Schnellladestationen auf Drehstrombasis sind die Ladezeiten relativ hoch. Um die Wartezeiten abzukürzen, wird auch über einen Austausch der Akkumulatoren in Stromtankstellen nachgedacht. Dies ist jedoch sehr umständlich und wegen der Vielfalt unterschiedlicher Fahrzeugakkumulatoren unpraktikabel.

Andererseits wurde bereits darüber nachgedacht, dass Fahrzeugakkumulatoren als Teil des Stromnetzes betrachtet werden können. Der Fahrzeugakkumulator kann bei Energieüberschuss im Stromnetz geladen werden, während bei Energiemangel aus dem Akkumulator Energie abgezogen und in das Stromnetz zurückgespeist werden kann. Man spricht hierbei auch von einem Vehicle-to-Grid-System, kurz V2G-System, siehe hierzu auch US2004/0130292. Um eine wirksame Netzstützung zu erreichen, müsste jedoch stets eine Vielzahl Elektrofahrzeuge mit ihrem Fahrzeugakkumulator über einen geeigneten Anschluss an das Versorgungsnetz angeschlossen sein, was unrealistisch ist.

Ausgehend hiervon liegt der Erfindung die Aufgabe zugrunde, ein Ladesystem für Elektrofahrzeuge der eingangs angegebenen Art zu entwickeln, das einen schnellen Ladevorgang ermöglicht und das auch zur Stützung des Stromnetzes eingesetzt werden kann.

Zur Lösung dieser Aufgabe wird die in Patentanspruch 1 und Patentanspruch 11 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, dass eine Schnellladung hohe Stromstärken erfordert, die die Verwendung von Akkumulatoren mit niedrigem Innenwiderstand erforderlich macht. Dies ist vor allem bei den neu entwickelten Akkumulatoren auf Lithium-Basis der Fall, die neben einem niedrigen Innenwiderstand auch eine hohe Energiedichte und Lebensdauer aufweisen. Der Innenwiderstand ist so klein, dass ein Ladestrom von etwa 500 Ampere möglich sein sollte. Die angestrebte Betriebsspannung von 100 bis 400 Volt wird durch eine Hintereinanderschaltung einer Vielzahl Akkumulatorzellen erzielt.

Die erfindungsgemäße Lösung besteht im wesentlichen darin, dass an die Netzladestufe des Ladesystems ein Pufferakkumulator mit einer gegenüber dem Fahrzeugakkumulator signifikant höheren Ladekapazität angeschlossen ist und dass an den Pufferakkumulator eine die Steuereinrichtung und einen DC/DC-Wandler umfassende, ausgangsseitig über den Ladeanschluss zeitweilig mit dem Fahrzeugakkumulator verbindbare Schnellladestufe angeschlossen ist. Außerdem wird gemäß der Erfindung vorgeschlagen, dass der Pufferakkumulator ausgangsseitig über eine eine mikroprozessorgestützte Schalteinheit und einen DC/AC-Wechselrichter aufweisende Rückspeisestufe auf das Wechselstromnetz aufschaltbar ist.

Mit den erfindungsgemäßen Maßnahmen wird sowohl die Netzladestufe als auch die Schnellladestufe zusammen mit dem Pufferspeicher und der Rückspeisestufe aus dem Elektrofahrzeug heraus in die Stromtankstelle verlagert. Die Stromtankstelle enthält einen Ladeanschluss, der über ein geeignetes Verbindungssystem, insbesondere ein Kabel mit Steckerverbindung, an den Fahrzeugakkumulator angeschlossen werden kann. Der Pufferakkumulator sorgt dafür, dass zur Ladung des Fahrzeugakkumulators sehr hohe Ströme aus dem Ladesystem abgezogen werden können, die eine effektive Schnellladung ermöglichen. Die Aufladung des Pufferspeichers aus dem Wechselstromnetz bedarf dagegen keiner Schnellladung. Die Aufladung kann vielmehr gleichmäßig bei moderaten Stromstärken aus dem Wechselstromnetz erfolgen, ohne dass es dort zu einer Überlastung kommt. Selbstverständlich ist die Ladekapazität des Pufferakkumulators so zu dimensionieren, dass sie dem Ladebedarf der ankommenden Kraftfahrzeuge gerecht wird. Letzteres bedeutet, dass stets eine relativ hohe Menge an elektrischer Energie in den Pufferakkumulatoren der Stromtankstellen vorgehalten werden muss, die im Falle des Auftretens einer Spitzenlast im Wechselstromnetz kurzzeitig zurückgespeist werden kann. Da über das Ladesystem ein direkter Zugriff zu dem Pufferakkumulator besteht, ist ein sehr schneller Umschaltvorgang möglich. Damit kann die Wartezeit bis zur Zuschaltung weiterer Spitzenlastkraftwerke unter Vermeidung einer unzulässigen Lastabsenkung im Wechselstromnetz überbrückt werden.

Eine bevorzugte Ausgestaltung der Erfindung sieht vor, dass der Ladeanschluss eine Steckerverbindung umfasst, die mindestens zwei mit der Steuereinrichtung und mit einer fahrzeugseitigen Kontrolleinrichtung verbundene Datenkontakte aufweist. Damit kann ein an das Ladesystem angeschlossenes Elektrofahrzeug oder dessen Akkumulator eindeutig identifiziert und hinsichtlich seines Ladezustands beim anschließenden Ladevorgang überwacht werden. Zu diesem Zweck ist es von Vorteil, wenn die fahrzeugseitige Kontrolleinrichtung mit analogen strom- und spannungsabhängigen Signalen des Fahrzeugakkumulators beaufschlagbar ist und die Signale in digitalisierter Form über die Datenkontakte an die Steuereinrichtung der Schnellladestufe zur Auswertung und zur Ansteuerung des DC/DC-Wechselrichters überträgt. Um mit möglichst wenigen, vorzugsweise zwei Datenkontakten auszukommen, bilden diese zweckmäßig eine Schnittstelle in einem digitalen CAN-Bus. Eine weitere bevorzugte Ausgestaltung der Erfindung sieht vor, dass der Pufferakkumulator an ein Batteriemanagementsystem zur Steuerung des Ladevorgangs und zur Überwachung und zum Abgleich des Ladezustands der einzelnen Akkumulatorzellen des Pufferakkumulators angeschlossen ist. Das Batteriemanagementsystem sorgt dafür, dass beim Lade- und Entladevorgang jede Einzelzelle überwacht wird, so dass es auch lokal zu keiner Überladung kommen kann, die zu einer unzulässigen Temperaturerhöhung führen könnte.

Gemäß einer weiteren vorteilhaften Ausgestaltung der Erfindung weist die Netzladestufe eine Diodenbrücke mit einem Leistungsfaktorkorrekturfilter auf. Der Leistungsfaktorkorrekturfilter (PFC-Baugruppe) sorgt dafür, dass die Diodenbrücke, die mit dem Pufferakkumulator verbunden ist, keine unzulässigen Spitzenspannungen abgibt. Der Spannungsverlauf am Ausgang der Diodenbrücke ist damit nicht dreieckförmig, sondern sinusförmig. Bevorzugt umfasst der Leistungsfaktorkorrekturfilter der Netzladestufe einen DC/DC-Wandler zur Spannungserhöhung mit einer Hochfrequenzdiodenbrücke, dessen Ausgangsfrequenz ein Vielfaches der Netzfrequenz beträgt und dessen Ausgangsspannung auf die Spannungsanforderungen des Pufferakkumulators abgestimmt ist. In der Hochfrequenzdiodenbrücke sind Schottky-Dioden angeordnet.

Eine weitere bevorzugte Ausgestaltung der Erfindung sieht vor, dass die Rückspeisestufe einen an den Pufferakkumulator angeschlossenen DC/DC-Wandler, einen an diesen angeschlossenen Hochfrequenztransformator und eine mit diesem verbundene Diodenbrücke aufweist, und dass die Diodenbrücke über einen an eine Transistorbrücke angeschlossenen Filterkondensator auf die Amplitudenspannung bei der augenblicklichen Netzfrequenz des Stromnetzes aufladbar ist.

Gemäß einer weiteren bevorzugten Ausgestaltung der Erfindung ist eine an das Wechselstromnetz angeschlossene Zentralsteuerung vorgesehen, die einen eingangsseitig mit der Netzfrequenz beaufschlagten Frequenzvergleicher aufweist, der nach Maßgabe einer Abweichung der Netzfrequenz von einem vorgegebenen Frequenzschwellwert über je eine Schalteinheit entweder die Netzladestufe oder die Rückspeisestufe durchsteuert. Zweckmäßig ist oberhalb des vorgegebenen Frequenzschwellwerts die Netzladestufe eingeschaltet und die Rückspeisestufe ausgeschaltet, während unterhalb des vorgegebenen Frequenzschwellwerts die Rückspeisestufe eingeschaltet und die Netzladestufe ausgeschaltet ist. In letzterem Falle wird die Rückspeisestufe über die Zentralsteuerung und/oder das Batteriemanagementsystem bei Unterschreiten eines vorgegebenen Grenzladezustands des Pufferakkumulators abgeschaltet.

Diesen Maßnahmen liegt der Gedanke zugrunde, dass das Stromnetz über das Elektrizitätswerk auf eine definierte Frequenz von 50 oder 60 Hz eingeregelt wird. Wenn das Stromnetz überlastet ist, sinkt die Frequenz ab. Der Frequenzvergleicher in der Zentralsteuerung sorgt dafür, dass die Überlastung durch Anforderung eines Stützstroms aus dem Pufferakkumulator kurzzeitig kompensiert wird. Diese Maßnahme ist vor allem dann wirksam, wenn eine Vielzahl Stromtankstellen ein ähnliches Ladesystem besitzen, die in ihrer Gesamtheit ein Spitzenlastsystem bilden, das eine merkliche Stützung des Stromnetzes ergeben kann. Jede Stromtankstelle ist in dieser Beziehung autonom und wird unter der Bedingung, dass die Frequenz unter den vorgegebenen Frequenzschwellwert fällt, einen Stützstrom abgeben. Dies kann an allen Stromtankstellen unabhängig voneinander erfolgen, so dass für ihre Kopplung keine zusätzlichen Regelmechanismen erforderlich sind.

Vorteilhafterweise weist die Zentralsteuerung zusätzlich eine Bedienstation für die Datenein- und -ausgabe auf.

Im Folgenden wird die Erfindung anhand der in der Zeichnung in schematischer Weise dargestellten Ausführungsbeispiels näher erläutert. Es zeigen
- Fig. 1: ein Blockschema eines Ladesystems mit Netzladestufe, Pufferakkumulator, Schnellladestufe und Netzrückspeisestufe;
- Fig. 2: das Blockschema nach Fig. 1 mit detaillierten Schaltungen der einzelnen Schaltstufen.

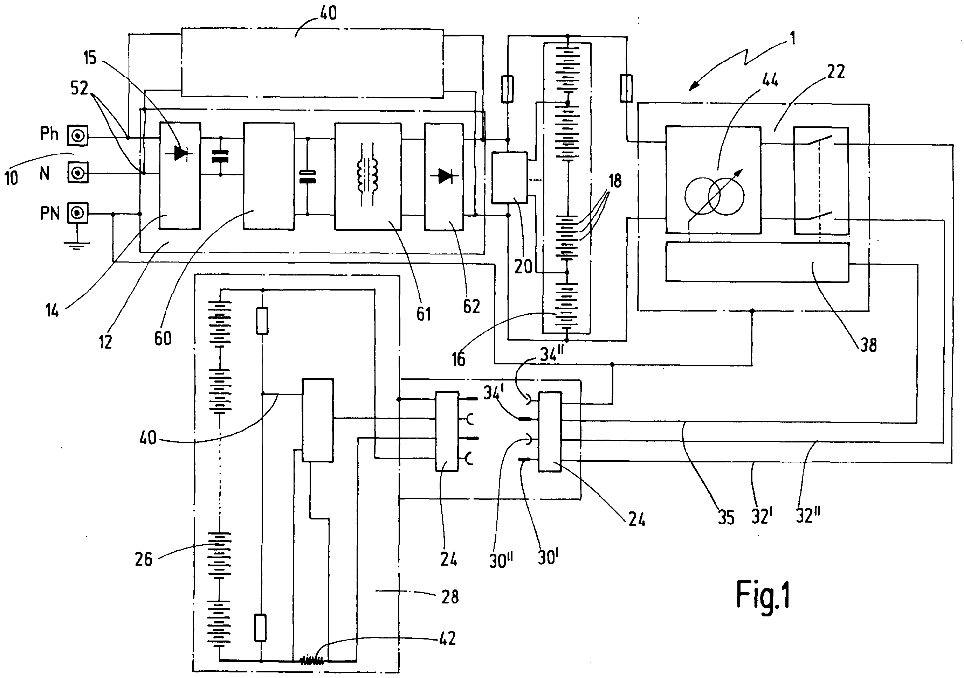

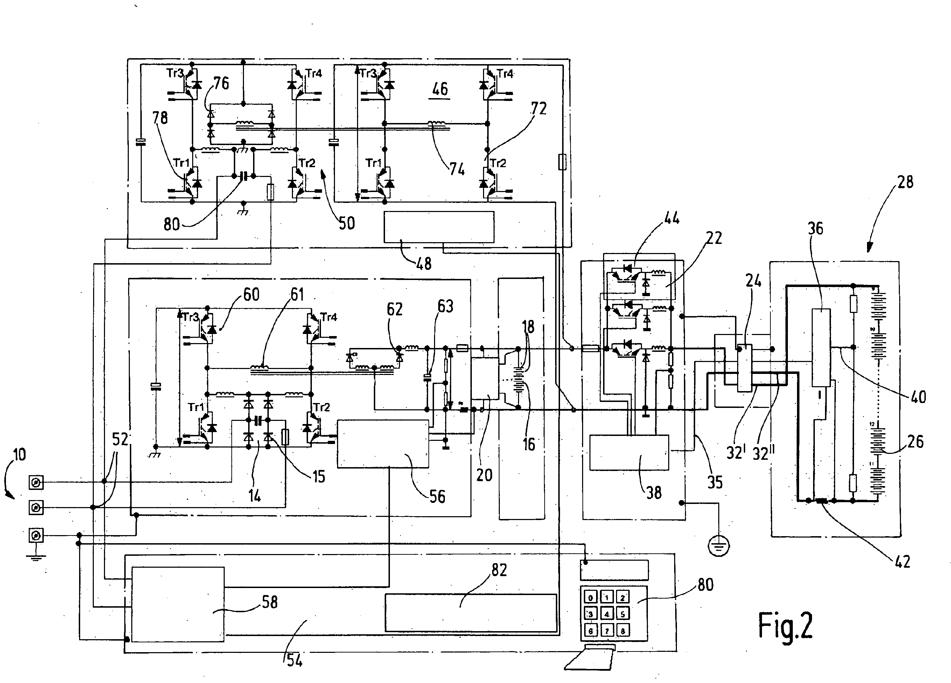

Das in Fig. 1 in Form eines Blockschemas und in Fig. 2 etwas detaillierter dargestellte Ladesystem 1 ist nach Art einer Stromtankstelle oder Elektrotankstelle zum Aufladen von Fahrzeugakkumulatoren 26 in Elektrofahrzeugen 28 bestimmt. Das Ladesystem 1 umfasst eine Netzladestufe 12, die bei dem gezeigten Ausführungsbeispiel eingangsseitig an ein einphasiges Wechselstromnetz 10 mit einem Phasen- oder Außenleiter Ph, einem Neutralleiter N und einem Schutzleiter PN angeschlossen ist. Die Netzladestufe 12 enthält einen AC/DC-Wandler 14, an dessen Ausgang ein Pufferakkumulator 16 angeschlossen ist.

Der AC/DC-Wandler 14 weist eine Diodenbrücke 15 mit einem auch als PFC-Baugruppe bezeichneten Leistungsfaktorkorrekturfilter 60 auf. Der Leistungsfaktorkorrekturfilter 60 sorgt dafür, dass die Diodenbrücke 15, die ausgangsseitig mit dem Pufferakkumulator 16 verbunden ist, keine unzulässigen Spitzenspannungen abgibt. Der zeitliche Spannungsverlauf ist am Ausgang der Diodenbrücke damit nicht dreieckförmig, sondern sinusförmig. Bevorzugt umfasst der Leistungsfaktorkorrekturfilter einen DC/DC-Wandler 61 zur Spannungserhöhung mit einer Hochfrequenzdiodenbrücke 62, dessen Ausgangsfrequenz ein Vielfaches der Netzfrequenz beträgt und dessen Ausgangsspannung auf die Spannungsanforderungen des Pufferakkumulators 16 abgestimmt ist. Letzteres wird durch den Ausgangskondensator 63 bewirkt.

Der Pufferakkumulator 16 weist eine Vielzahl Einzelzellen 18 auf, die in Reihe und gegebenenfalls auch parallel geschaltet sind. Der Pufferakkumulator 16 ist eingangsseitig an ein Batteriemanagementsystem (BMS) 20 zur Steuerung des Ladevorgangs und zum Abgleich des Ladezustands der Akkumulatorzellen 18 angeschlossen. Das Batteriemanagementsystem 20 sorgt dafür, dass beim Lade- und Entladevorgang jede Einzelzelle 18 überwacht wird, so dass es auch lokal zu keiner Überladung kommen kann, die zu einer unzulässigen Temperaturerhöhung führen könnte.

Das Ladesystem umfasst ferner eine Schnellladestufe 22, die eingangsseitig an den Pufferakkumulator 16 angeschlossen ist und die ausgangsseitig einen Ladeanschluss 24 aufweist, der zu Ladezwecken zeitweilig mit dem Fahrzeugakkumulator 26 eines Elektrofahrzeugs 28 verbindbar ist. Der Ladeanschluss 24 enthält bei dem gezeigten Ausführungsbeispiel eine Steckverbindung mit zwei Ladekontakten 30',30" für die stromführenden Kabel 32',32" und mit zwei Datenkontakten 34',34". Die Datenkontakte 34',34" bilden eine Schnittstelle in einem Bussystem, beispielsweise einem CAN-Bus 35, über welchen ein Datenaustausch zwischen einer fahrzeugseitigen Kontrolleinrichtung 36 und einer mikroprozessorgestützten Steuereinrichtung 38 in der Schnellladestufe 22 erfolgt. Damit kann ein an das Ladesystem 1 angeschlossenes Elektrofahrzeug 28 oder dessen Fahrzeugakkumulator 26 eindeutig identifiziert und beim Ladevorgang hinsichtlich seines Ladezustands überwacht werden. Die fahrzeugseitige Kontrolleinrichtung 36 ist mit einem Spannungsteiler 40 zur Messung der Akkumulatorspannung und mit einem Shunt 42 zur Messung des Ladestroms ausgestattet. Die von der Kontrolleinrichtung 36 auf diese Weise erfassten analogen strom- und spannungsabhängigen Signale werden in digitalisierter Form über die Datenkontakte 34',34" an die Steuereinrichtung 38 der Schnellladestufe 22 zur Auswertung und zur Ansteuerung eines in der Schnellladestufe angeordneten DC/DC-Wechselrichters 44 übertragen.

Anstelle der galvanischen Verbindung über die Ladekontakte 30',30" in einem konduktiven Ladesystem ist grundsätzlich auch eine drahtlose Verbindung über eine Induktionsstrecke (induktives Ladesystem) denkbar. Andererseits ist anstelle der galvanischen Verbindung über die Datenkontakte 34',34" auch eine drahtlose Datenübertragung über eine induktive oder kapazitive Kopplungsstrecke, eine Funkstrecke, eine Infrarotstrecke oder eine Bluetooth-Strecke möglich.

Der Pufferakkumulator 16 sorgt dafür, dass zur Ladung des Fahrzeugakkumulators 26 über die Schnellladestufe 22 sehr hohe Ströme aus dem Ladesystem 1 abgezogen werden können. Andererseits bedarf die Aufladung des Pufferakkumulators 16 aus dem Wechselstromnetz 10 keiner Schnellladung. Die Aufladung kann vielmehr gleichmäßig bei moderaten Stromstärken in der Größenordnung von 16 bis 32 Ampere aus dem Wechselstromnetz 10 erfolgen, ohne dass es zu einer Überlastung kommt.

Eine Besonderheit der Erfindung besteht darin, dass an den Pufferakkumulator 16 ausgangsseitig außerdem eine Rückspeisestufe 46 angeschlossen ist, die eine mikroprozessorgestützte Schalteinheit 48 aufweist und über einen DC/AC-Wechselrichter 50 an einer Einspeisestelle 52 auf das Wechselstromnetz 10 aufschaltbar ist. Die Rückspeisestufe 46 weist zu diesem Zweck einen an den Pufferakkumulator 16 angeschlossenen DC/DC-Wandler 72, einen an diesen angeschlossenen Hochfrequenztransformator 74 und eine mit diesem verbundene, die DC/AC-Wandlung durchführende Diodenbrücke 76 auf. Weiter ist die Diodenbrücke über einen an eine Transistorbrücke 78 angeschlossenen Filterkondensator 79 auf die Amplitudenspannung bei der augenblicklichen Netzfrequenz des Wechselstromnetzes 10 aufladbar.

Die Ladekapazität des Pufferakkumulators 16 ist so dimensioniert, dass sie dem Ladebedarf der ankommenden Kraftfahrzeuge gerecht wird. Letzteres bedeutet, dass stets eine relativ große Menge an elektrischer Energie im Pufferakkumulator 16 der Stromtankstellen vorgehalten wird, die im Falle des Auftretens einer Spitzenlast im Wechselstromnetz 10 kurzzeitig zurückgespeist werden kann. Da über das Ladesystem 1 ein direkter Zugriff zu dem Pufferakkumulator 16 besteht, ist ein sehr schneller Umschaltvorgang möglich. Damit kann die Wartezeit bis zur Zuschaltung weiterer Spitzenlastkraftwerke ohne eine unzulässige Lastabsenkung im Wechselstromnetz 10 überbrückt werden.

Zu diesem Zweck umfasst das Ladesystem außerdem eine Zentralsteuerung 54, die einen eingangsseitig mit der Netzfrequenz beaufschlagten und ausgangsseitig über je eine Schalteinheit 56,48 mit der Netzladestufe 12 und der Rückspeisestufe 46 gekoppelten Frequenzvergleicher 58 aufweist. Über den Frequenzvergleicher 58 wird nach Maßgabe einer Abweichung der Netzfrequenz von einem vorgegebenen Frequenzschwellwert über die jeweilige Schalteinheit entweder die Netzladestufe oder die Rückspeisestufe durchgesteuert. Im Normalbetrieb beträgt die Netzfrequenz beispielsweise 50 Hz. Wenn das Wechselstromnetz überlastet ist, sinkt die Netzfrequenz ab. Über den Frequenzvergleicher 58 in der Zentralsteuerung 54 kann erreicht werden, dass die Überlastung durch Anforderung eines Stützstroms den Pufferakkumulator kurzzeitig kompensiert wird. Dies wird dadurch erreicht, dass über den Frequenzvergleicher 58 und die Schalteinheit 48 die Rückspeisestufe 46 durchgeschaltet und die Netzladestufe 12 über die Schalteinheit 56 ausgeschaltet wird, wenn die Netzfrequenz einen vorgegebenen Frequenzschwellwert von beispielsweise 48,5 Hz unterschreitet. Diese Maßnahme ist vor allem dann wirksam, wenn eine Vielzahl Stromtankstellen mit gleichartigen voneinander unabhängigen Ladesystemen vorhanden ist, die in ihrer Gesamtheit nach Art eines Spitzenlastsystems eine merkliche Stützung des Wechselstromnetzes 10 ergeben können.

Die Zentralsteuerung 54 weist außerdem eine Bedienstation 80 für die Datenein- und -ausgabe oder für eine Internet-Fernsteuerung 82 auf.

Zusammenfassend ist folgendes festzuhalten: Die Erfindung bezieht sich auf ein Ladesystem für Elektrofahrzeuge. Das Ladesystem umfasst eine eingangsseitig über eine Anschlussstelle an ein Wechselstromnetz 10 anschließbare, einen AC/DC-Wandler aufweisende Netzladestufe 12, eine Steuereinrichtung 38 zur Überwachung eines Ladevorgangs sowie mindestens einen ausgangsseitigen Ladeanschluss 24, welch letzterer zeitweilig mit einem Fahrzeugakkumulator 26 verbindbar ist. Eine Besonderheit der Erfindung besteht darin, dass an die Netzladestufe 12 ein Pufferakkumulator 16 mit einer gegenüber dem Fahrzeugakkumulator 26 signifikant höheren Ladekapazität angeschlossen ist. An den Pufferakkumulator 16 ist eine die Steuereinrichtung 38 und einen DC/DC-Wandler 44 umfassende, ausgangsseitig über den Ladeanschluss 24 zeitweilig mit einem Fahrzeugakkumulator 26 verbindbare Schnellladestufe 22 angeschlossen. Außerdem ist der Pufferakkumulator 16 ausgangsseitig über eine eine Schalteinheit 48 und einen DC/AC-Wechselrichter 50 aufweisende Rückspeisestufe 46 an einer Einspeisestelle 52 auf das Wechselstromnetz 10 aufschaltbar.

### Bezugszeichenliste:

- 1: Ladesystem
- 10: Wechselstromnetz
- 12: Netzladestufe
- 14: AC/DC-Wandler
- 15: Diodenbrücke
- 16: Pufferakkumulator
- 18: Einzelzelle
- 20: Batteriemanagementsystem
- 22: Schnellladestufe
- 24: Ladeanschluss
- 26: Fahrzeugakkumulator
- 28: Elektrofahrzeug
- 30',30": Ladekontakte
- 32',32": Kabel
- 34',34": Datenkontakte
- 35: CAN-Bus
- 36: Kontrolleinrichtung
- 38: Steuereinrichtung
- 40: Spannungsteiler
- 42: Shunt
- 44: DC/DC-Wandler
- 46: Rückspeisestufe
- 48: Schalteinheit
- 50: DC/AC-Wechselrichter
- 52: Einspeisestelle
- 54: Zentralsteuerung
- 56: Schalteinheit
- 58: Frequenzvergleicher
- 60: Leistungsfaktorkorrekturfilter
- 61: DC-DC-Wandler
- 62: Hochfrequenzdiodenbrücke
- 63: Ausgangskondensator
- 72: DC-DC-Wandler
- 74: Hochfrequenztransformator
- 76: Diodenbrücke
- 78: Transistorbrücke
- 79: Filterkondensator
- 80: Bedienstation
- 82: Internet-Fernsteuerung

## Patentansprüche

1. Verwendung mehrerer als Stromtankstelle ausgebildeter autonomer Ladesysteme zum Laden von fahrzeuginternen Akkumulatoren in Elektrofahrzeugen mit elektrischer Energie,
a) welche Ladesysteme eine eingangsseitig über eine Anschlussstelle an ein Wechselstromnetz (10) angeschlossene, einen AC/DC-Wandler (14) enthaltende Netzladestufe (12) aufweisen,
b) welche Netzladestufe (12) eine Steuereinrichtung (38) zur Überwachung eines Ladevorgangs, mindestens einen ausgangsseitigen, lösbar mit dem fahrzeuginternen Akkumulator (26) eines Elektrofahrzeugs verbindbaren Ladeanschluss (24) sowie einen über das Wechselstromnetz aufladbaren Pufferakkumulator (16) aufweist,
c) welcher Pufferakkumulator an eine die Steuereinrichtung (38) und einen DC/DC-Wandler (44) umfassende, ausgangsseitig über den Ladeanschluss (24) lösbar mit dem fahrzeuginternen Akkumulator verbindbare Ladestufe (22) angeschlossen und wahlweise über eine Rückspeisestufe auf das Wechselstromnetz (10) aufschaltbar ist,
d) welche Ladestufe (22) als Schnellladestufe ausgebildet ist,
e) und welcher Pufferakkumulator (16) eine gegenüber dem fahrzeuginternen Akkumulator (26) signifikant höhere Ladekapazität aufweist und über einen in der Rückspeisestufe (46) angeordneten DC/AC-Wechselrichter (50) auf das Wechselstromnetz (10) aufschaltbar ist,
als Spitzenlastssystem, wobei die autonomen Ladesysteme mit dem Wechselstromausgang ihrer Rückspeisestufen (46) an unterschiedlichen Einspeisestellen in das Wechselstromnetz (10) eingekoppelt sind und **dadurch gekennzeichnet, dass** über ihre Pufferakkumulatoren im Falle des Auftretens einer Spitzenlast elektrische Energie zur Kompensation einer unzulässigen Lastabsenkung in das Wechselstromnetz zurückgespeist wird.

2. Verwendung nach Anspruch 1, **dadurch gekennzeichnet, dass** die elektrische Energie zur Überbrückung einer Wartezeit bis zur Zuschaltung anderer Spitzenlastkraftwerke über die Pufferakkumulatoren in das Wechselstromnetz zurückgespeist wird.

3. Verwendung nach Anspruch 2, **dadurch gekennzeichnet, dass** der Pufferakkumulator (16) der Ladesysteme an ein Batteriemanagementsystem (20) zur Steuerung des Ladevorgangs und zur Überwachung und zum Abgleich des Ladezustands der einzelnen Akkumulatorzellen (18) angeschlossen ist.

4. Verwendung nach einem der Ansprüche 1 bis 3, **dadurch gekennzeichnet, dass** die Rückspeisestufe (46) der Ladesysteme einen an den Pufferakkumulator (16) angeschlossenen DC/DC-Wandler (72), einen an diesen angeschlossenen Hochfrequenztransformator (74) und eine mit diesem verbundene Diodenbrücke (76) aufweist, und dass die Diodenbrücke (76) über einen an eine Transistorbrücke (78) angeschlossenen Filterkondensator (79) auf die Amplitudenspannung des Wechselstromnetzes (10) mit dessen augenblicklicher Netzfrequenz umgesetzt wird.

5. Verwendung nach einem der Ansprüche 1 bis 4, **dadurch gekennzeichnet, dass** die Netzladestufe (12) der Ladesysteme eine Diodenbrücke (15) mit einem Leistungsfaktorkorrekturfilter (60) aufweist.

6. Verwendung nach Anspruch 5, **dadurch gekennzeichnet, dass** der Leistungsfaktorkorrekturfilter (60) der Netzladestufe (12) einen DC/DC-Wandler (61) mit einer Hochfrequenzdiodenbrücke (62) umfasst, dessen Ausgangsfrequenz ein Vielfaches der Netzfrequenz beträgt und dessen Ausgangsspannung auf die Spannungsanforderungen des Pufferakkumulators (16) abgestimmt wird.

7. Verwendung nach einem der Ansprüche 1 bis 6, **dadurch gekennzeichnet, dass** die Rückspeisestufe (46) bei Unterschreiten eines vorgegebenen Grenzladezustands des Pufferakkumulators (16) abgeschaltet wird.

8. Verwendung nach einem der Ansprüche 1 bis 7, **dadurch gekennzeichnet, dass** der mindestens eine Ladeanschluss (24) der Ladesysteme eine Steckerverbindung umfasst, die mindestens zwei mit der Steuereinrichtung (38) und mit einer fahrzeugseitigen Kontrolleinrichtung (36) verbundene Datenkontakte (34', 34") aufweist.

9. Verwendung nach Anspruch 8, **dadurch gekennzeichnet, dass** die fahrzeugseitige Kontrolleinrichtung (36) mit analogen strom- und spannungsabhängigen Signalen des Fahrzeugakkumulators (26) beaufschlagbar ist und diese in digitalisierter Form über die Datenkontakte (34', 34") an die Steuereinrichtung (38) der Schnellladestufe (22) zur Auswertung und zur Ansteuerung des DC/DC-Wandlers (44) überträgt.

10. Verwendung nach einem der Ansprüche 1 bis 9, **dadurch gekennzeichnet, dass** die autonomen Ladesysteme (1) einen eingangsseitig mit der Frequenz des Wechselstromnetzes (10) beaufschlagten und ausgangsseitig über eine Schalteinheit (48) mit ihrer Rückspeisestufe (46) verbundenen Frequenzvergleicher (58) aufweisen, der nach Maßgabe einer Abweichung der Netzfrequenz von einem vorgegebenen Frequenzschwellwert ihre Rückspeisestufe (46) durchsteuert.

11. Ladesystem zum Laden von fahrzeuginternen Akkumulatoren in Elektrofahrzeugen mit elektrischer Energie, insbesondere zur Verwendung gemäß einem der Ansprüche 1 bis 10, mit einer eingangsseitig über eine Anschlussstelle an ein Wechselstromnetz (10) angeschlossenen, einen AC/DC-Wandler (14) aufweisenden Netzladestufe (12), die eine vorzugsweise mikroprozessorgestützte Steuereinrichtung (38) zur Überwachung eines Ladevorgangs, mindestens einen ausgangsseitigen, lösbar mit dem fahrzeuginternen Akkumulator (26) eines Elektrofahrzeugs verbindbaren Ladeanschluss (24) und einen Pufferakkumulator (16) aufweist, welcher Pufferakkumulator an eine die Steuereinrichtung (38) und einen DC/DC-Wandler (44) umfassende, ausgangsseitig über den Ladeanschluss (24) lösbar mit dem fahrzeuginternen Akkumulator verbindbare Ladestufe (22) angeschlossen und wahlweise über eine Rückspeisestufe auf das Wechselstromnetz (10) aufschaltbar ist, wobei die ausgangsseitig am Pufferakkumulator (16) angeschlossene, den DC/DC-Wandler (44) umfassende Ladestufe (22) als Schnellladestufe ausgebildet ist, wobei der Pufferakkumulator (16) eine gegenüber dem fahrzeuginternen Akkumulator (26) signifikant höhere Ladekapazität aufweist und über einen in der Rückspeisestufe (46) angeordneten DC/AC-Wechselrichter (50) auf das Wechselstromnetz (10) aufschaltbar ist, **dadurch gekennzeichnet, dass** eine Zentralsteuerung (54) vorgesehen ist, die einen eingangsseitig mit der Frequenz des Wechselstromnetzes (10) beaufschlagten und ausgangsseitig über je eine Schalteinheit (56, 48) mit der Netzladestufe (12) und der Rückspeisestufe (46) verbundenen Frequenzvergleicher (58) aufweist, der nach Maßgabe einer Abweichung der Netzfrequenz von einem vorgegebenen Frequenzschwellwert über die jeweilige Schalteinheit (56, 48) entweder die Netzladestufe (12) oder die Rückspeisestufe (46) durchsteuert.

12. Ladesystem nach Anspruch 11, **dadurch gekennzeichnet, dass** oberhalb eines vorgegebenen Frequenzschwellwerts die Netzladestufe (12) eingeschaltet und die Rückspeisestufe (46) ausgeschaltet ist und dass unterhalb des vorgegebenen Frequenzschwellwerts die Rückspeisestufe (46) eingeschaltet und die Netzladestufe (12) ausgeschaltet ist.

13. Ladesystem nach Anspruch 11 oder 12, **dadurch gekennzeichnet, dass** der Pufferakkumulator (16) an ein Batteriemanagementsystem (20) zur Steuerung des Ladevorgangs und zur Überwachung und zum Abgleich des Ladezustands der einzelnen Akkumulatorzellen (18) angeschlossen ist.

14. Ladesystem nach einem der Ansprüche 11 bis 13, **dadurch gekennzeichnet, dass** die Rückspeisestufe (46) einen an den Pufferakkumulator (16) angeschlossenen DC/DC-Wandler (72), einen an diesen angeschlossenen Hochfrequenztransformator (74) und eine mit diesem verbundene Diodenbrücke (76) aufweist, und dass die Diodenbrücke (76) über einen an eine Transistorbrücke (78) angeschlossenen Filterkondensator (79) auf die Amplitudenspannung des Wechselstromnetzes (10) mit dessen augenblicklicher Netzfrequenz umsetzbar ist.

15. Ladesystem nach einem der Ansprüche 11 bis 14, **dadurch gekennzeichnet, dass** die Rückspeisestufe (46) bei Unterschreiten eines vorgegebenen Grenzladezustands des Pufferakkumulators (16) abschaltbar ist.

16. Ladesystem nach einem der Ansprüche 11 bis 15, **dadurch gekennzeichnet, dass** der Ladeanschluss (24) eine Steckerverbindung umfasst, die mindestens zwei mit der Steuereinrichtung (38) und mit einer fahrzeugseitigen Kontrolleinrichtung (36) verbundene Datenkontakte (34', 34") aufweist.

17. Ladesystem nach Anspruch 16, **dadurch gekennzeichnet, dass** die fahrzeugseitige Kontrolleinrichtung (36) mit analogen strom- und spannungsabhängigen Signalen des Fahrzeugakkumulators (26) beaufschlagbar ist und diese in digitalisierter Form über die Datenkontakte (34', 34") an die Steuereinrichtung (38) der Schnellladestufe (22) zur Auswertung und zur Ansteuerung des DC/DC-Wandlers (44) überträgt.

## Claims

1. Use of a plurality of autonomous charging systems embodied as charging stations for charging vehicle-internal rechargeable batteries in electric vehicles with electrical energy,
a) said charging systems having a network charging stage (12), the input side of which is connected to an AC network (10) by means of a connection point and which contains an AC/DC converter (14),
b) said network charging stage (12) having a control device (38) for monitoring a charging process, at least one output-side charging connection (24), which can be connected in a releasable manner to the vehicle-internal rechargeable battery (26) of an electric vehicle, and a buffer storage battery (16), which can be charged by means of the AC network,
c) said buffer storage battery being connected to a charging stage (22), which comprises the control device (38) and a DC/DC converter (44) and the output side of which can be connected in a releasable manner to the vehicle-internal rechargeable battery by means of the charging connection (24), and optionally being able to be connected to the AC network (10) by means of a feedback stage,
d) said charging stage (22) being embodied as a quick-charging stage,
e) and said buffer storage battery (16) having a charging capacity that is significantly higher compared to the vehicle-internal rechargeable battery (26) and being able to be connected to the AC network (10) by means of a DC/AC inverter (50) arranged in the feedback stage (46),
as a peak load system, wherein the autonomous charging systems are coupled to the AC output of the feedback stages (46) of said autonomous charging systems at different feed-in points in the AC network (10) and **characterized in that**, in the event of a peak load arising, electrical energy is fed back to the AC network by means of the buffer storage batteries of said autonomous charging systems in order to compensate for an impermissible decrease in load.

2. Use according to Claim 1, **characterized in that** the electrical energy is fed back to the AC network by means of the buffer storage batteries in order to bridge a waiting time until other peak load power plants are connected.

3. Use according to Claim 2, **characterized in that** the buffer storage battery (16) of the charging systems is connected to a battery management system (20) in order to control the charging process and to monitor and to adjust the state of charge of the individual rechargeable battery cells (18).

4. Use according to one of Claims 1 to 3, **characterized in that** the feedback stage (46) of the charging systems has a DC/DC converter (72) connected to the buffer storage battery (16), a high-frequency transformer (74) connected to said DC/DC converter, and a diode bridge (76) connected to said high-frequency transformer, and **in that** the diode bridge (76) is converted to the amplitude voltage of the AC network (10) at the instantaneous network frequency thereof by means of a filter capacitor (79) connected to a transistor bridge (78).

5. Use according to one of Claims 1 to 4, **characterized in that** the network charging stage (12) of the charging systems has a diode bridge (15) having a power factor correction filter (60).

6. Use according to Claim 5, **characterized in that** the power factor correction filter (60) of the network charging stage (12) comprises a DC/DC converter (61) having a high-frequency diode bridge (62), the output frequency of which is a multiple of the network frequency and the output voltage of which is adjusted to the voltage requirements of the buffer storage battery (16).

7. Use according to one of Claims 1 to 6, **characterized in that** the feedback stage (46) is disconnected when a prescribed limit state of charge of the buffer storage battery (16) is undershot.

8. Use according to one of Claims 1 to 7, **characterized in that** the at least one charging connection (24) of the charging systems comprises a plug connection, which has at least two data contacts (34', 34") connected to the control device (38) and to a vehicle-based control device (36).

9. Use according to Claim 8, **characterized in that** the vehicle-based control device (36) can be subjected to analogue current-dependent and voltage-dependent signals of the rechargeable vehicle battery (26) and transmits said signals in digitized form to the control device (38) of the quick-charging stage (22) via the data contacts (34', 34") in order to evaluate and to drive the DC/DC converter (44).

10. Use according to one of Claims 1 to 9, **characterized in that** the autonomous charging systems (1) have a frequency comparator (58), the input side of which is subjected to the frequency of the AC network (10) and the output side of which is connected to the feedback stage (46) of said charging systems by means of a switching unit (48), said frequency comparator activating the feedback stage (46) of said charging systems in accordance with a deviation of the network frequency from a prescribed frequency threshold value.

11. Charging system for charging vehicle-internal rechargeable batteries in electric vehicles with electrical energy, in particular for use according to one of Claims 1 to 10, having a network charging stage (12), the input side of which is connected to an AC network (10) by means of a connection point and which has an AC/DC converter (14), said network charging stage having a preferably microprocessor-based control device (38) for monitoring a charging process, at least one output-side charging connection (24), which can be connected in a releasable manner to the vehicle-internal rechargeable battery (26) of an electric vehicle, and a buffer storage battery (16), said buffer storage battery being connected to a charging stage (22), which comprises the control device (38) and a DC/DC converter (44) and the output side of which can be connected in a releasable manner to the vehicle-internal rechargeable battery by means of the charging connection (24), and optionally being able to be connected to the AC network (10) by means of a feedback stage, wherein the charging stage (22), the output side of which is connected to the buffer storage battery (16) and which comprises the DC/DC converter (44), is embodied as a quick-charging stage, wherein the buffer storage battery (16) has a charging capacity that is significantly higher compared to the vehicle-internal rechargeable battery (26) and being able to be connected to the AC network (10) by means of a DC/AC inverter (50) arranged in the feedback stage (46), **characterized in that** a central controller (54) is provided, said central controller having a frequency comparator (58), the input side of which is subjected to the frequency of the AC network (10) and the output side of which is connected to the network charging stage (12) and to the feedback stage (46) in each case by means of a switching unit (56, 48), said frequency comparator activating either the network charging stage (12) or the feedback stage (46) in accordance with a deviation of the network frequency from a prescribed frequency threshold value by means of the respective switching unit (56, 48).

12. Charging system according to Claim 11, **characterized in that**, above a prescribed frequency threshold value, the network charging stage (12) is switched on and the feedback stage (46) is switched off and **in that**, below the prescribed frequency threshold value, the feedback stage (46) is switched on and the network charging stage (12) is switched off.

13. Charging system according to Claim 11 or 12, **characterized in that** the buffer storage battery (16) is connected to a battery management system (20) in order to control the charging process and to monitor and to adjust the state of charge of the individual rechargeable battery cells (18).

14. Charging system according to one of Claims 11 to 13, **characterized in that** the feedback stage (46) has a DC/DC converter (72) connected to the buffer storage battery (16), a high-frequency transformer (74) connected to said DC/DC converter, and a diode bridge (76) connected to said high-frequency transformer, and **in that** the diode bridge (76) can be converted to the amplitude voltage of the AC network (10) at the instantaneous network frequency thereof by means of a filter capacitor (79) connected to a transistor bridge (78).

15. Charging system according to one of Claims 11 to 14, **characterized in that** the feedback stage (46) can be disconnected when a prescribed limit state of charge of the buffer storage battery (16) is undershot.

16. Charging system according to one of Claims 11 to 15, **characterized in that** the charging connection (24) comprises a plug connection, which has at least two data contacts (34', 34") connected to the control device (38) and to a vehicle-based control device (36).

17. Charging system according to Claim 16, **characterized in that** the vehicle-based control device (36) can be subjected to analogue current-dependent and voltage-dependent signals of the rechargeable vehicle battery (26) and transmits said signals in digitized form to the control device (38) of the quick-charging stage (22) via the data contacts (34', 34") in order to evaluate and to drive the DC/DC converter (44).

## Revendications

1. Utilisation de plusieurs systèmes de charge autonomes réalisés sous la forme d'une station de charge pour charger des accumulateurs internes à des véhicules électriques avec de l'énergie électrique,
a) lesquels systèmes de charge comportent un étage de charge réseau (12) raccordé côté entrée à un réseau à courant alternatif (10) par l'intermédiaire d'un point de connexion et comportant un convertisseur alternatif/continu (14),
b) lequel étage de charge secteur (12) comporte un dispositif de commande (38) destiné à surveiller un processus de charge, au moins un raccordement de charge (24) qui peut être relié côté sortie de manière amovible à l'accumulateur interne au véhicule (26) d'un véhicule électrique ainsi qu'un accumulateur tampon (16) qui peut être chargé par l'intermédiaire du réseau à courant alternatif,
c) lequel accumulateur tampon est raccordé à un étage de charge (22) comprenant le dispositif de commande (38) et un convertisseur continu/continu (44), pouvant être relié de manière amovible côté sortie par l'intermédiaire du raccordement de charge (24) à l'accumulateur interne au véhicule, et peut être raccordé en option au réseau à courant alternatif (10) par l'intermédiaire d'un étage d'alimentation de retour,
d) lequel étage de charge (22) est réalisé sous la forme d'un étage de charge rapide,
e) et lequel accumulateur tampon (16) présente une capacité de charge sensiblement plus élevée que celle de l'accumulateur interne au véhicule (26) et peut être raccordé au réseau à courant alternatif (10) par l'intermédiaire d'un convertisseur continu/alternatif (50) disposé dans l'étage d'alimentation de retour (46),
en tant que système de charge de pointe, dans lequel les systèmes de charge autonomes sont couplés à la sortie à courant alternatif de leurs étages d'alimentation de retour (46) en des points d'alimentation dans le réseau à courant alternatif (10) et **caractérisé en ce que**, lors de l'apparition d'une charge de pointe, de l'énergie électrique est réinjectée dans le réseau à courant alternatif par l'intermédiaire de leurs accumulateurs tampons pour compenser une baisse de charge excessive.

2. Utilisation selon la revendication 1, **caractérisée en ce que** l'énergie électrique est réinjectée dans le réseau à courant alternatif par l'intermédiaire des accumulateurs tampons pour couvrir un temps d'attente s'écoulant jusqu'à la mise en circuit d'autres centrales de charge de pointe.

3. Utilisation selon la revendication 2, **caractérisée en ce que** l'accumulateur tampon (16) des systèmes de charge est raccordé à un système de gestion de batterie (20) à des fins de commande du processus de charge, de surveillance et d'ajustement de l'état de charge des cellules d'accumulateur individuelles (18).

4. Utilisation selon l'une quelconque des revendications 1 à 3, **caractérisée en ce que** l'étage d'alimentation de retour (48) des systèmes de charge comporte un convertisseur continu/continu (72) raccordé à un accumulateur tampon (16), un transformateur à haute fréquence (74) raccordé à ce dernier et un pont de diodes (76) qui lui est relié, et **en ce que** le pont de diodes (76) est amené à passer par l'intermédiaire d'un condensateur de filtrage (79) raccordé à un pont de transistors (78) à la tension d'amplitude du réseau à courant alternatif (10) ayant la fréquence de réseau instantanée de ce dernier.

5. Utilisation selon l'une quelconque des revendications 1 à 4, **caractérisée en ce que** l'étage de charge réseau (12) des systèmes de charge comporte un pont de diodes (15) muni d'un filtre de correction de facteur de puissance (60).

6. Utilisation selon la revendication 5, **caractérisée en ce que** le filtre de correction de facteur de puissance (60) de l'étage de charge réseau (12) comprend un convertisseur continu/continu (61) muni d'un pont de diodes à haute fréquence (62) dont la fréquence de sortie est égale à un multiple de la fréquence du réseau et dont la tension de sortie est adaptée aux exigences de tension de l'accumulateur tampon (16).

7. Utilisation selon l'une quelconque des revendications 1 à 6, **caractérisée en ce que** l'étage d'alimentation de retour (46) est mis hors circuit lors d'un abaissement en dessous d'un état de charge limite prédéterminé de l'accumulateur tampon (16).

8. Utilisation selon l'une quelconque des revendications 1 à 7, **caractérisée en ce que** ledit au moins un raccordement de charge (24) des systèmes de charge comprend une connexion enfichable qui comporte au moins deux contacts de données (34', 34") reliés au dispositif de commande (38) et à un dispositif de contrôle (36) côté véhicule.

9. Utilisation selon la revendication 8, dans laquelle le dispositif de contrôle côté véhicule (36) peut recevoir des signaux dépendant du courant et de la tension en provenance de l'accumulateur de véhicule (26) et en ce qu'il transmet ces derniers sous forme numérique par l'intermédiaire des contacts de données (34', 34") au dispositif de commande (38) de l'étage de charge rapide (22) à des fins d'évaluation et de commande du convertisseur continu/continu (44).

10. Utilisation selon l'une quelconque des revendications 1 à 9, **caractérisée en ce que** les systèmes de charge autonomes (1) comportent un comparateur de fréquence (58) recevant, côté entrée, la fréquence du réseau à courant alternatif (10) et relié, côté sortie, par l'intermédiaire d'une unité de commutation (48), à leur étage d'alimentation de retour (46), lequel comparateur de fréquence commande son étage d'alimentation de retour (46) en fonction d'un écart de la fréquence de réseau par rapport à une valeur de seuil de fréquence prédéterminée.

11. Système de charge destiné à charger des accumulateurs internes à des véhicules dans des véhicules électriques avec de l'énergie électrique, notamment pour une utilisation selon l'une quelconque des revendications 1 à 10, comportant un étage de charge rapide (12) muni, côté entrée, d'un convertisseur alternatif/continu (14) raccordé par l'intermédiaire d'un point de raccordement à un réseau à courant alternatif (10), lequel étage de charge rapide comporte un dispositif de commande (38) de préférence à base de microprocesseur permettant de surveiller un processus de charge, au moins un raccordement de charge (24) qui peut être relié de manière amovible côté sortie à l'accumulateur interne au véhicule (26) d'un véhicule électrique, et un accumulateur tampon (16), lequel accumulateur tampon est raccordé à un étage de charge (22) comprenant le dispositif de commande (38) et un convertisseur continu/continu (44), pouvant être relié de manière amovible côté sortie, par l'intermédiaire du raccordement de charge (24), à l'accumulateur interne au véhicule, et qui peut être raccordé en option au réseau à courant alternatif (10) par l'intermédiaire d'un étage d'alimentation de retour, dans lequel l'étage de charge (22) raccordé côté sortie à l'accumulateur tampon (16) et comprenant le convertisseur continu/continu (44) est réalisé sous la forme d'un étage de charge rapide, dans lequel l'accumulateur tampon (16) présente une capacité de charge sensiblement plus élevée que celle de l'accumulateur interne au véhicule (26) et peut être raccordé au réseau à courant alternatif (10) par l'intermédiaire d'un convertisseur continu/alternatif (50) disposé dans l'étage d'alimentation de retour (46), **caractérisé en ce qu'**il est prévu une unité de commande centrale (54) qui comporte un comparateur de fréquence (58) recevant côté entrée la fréquence du réseau à courant alternatif (10) et relié côté sortie par l'intermédiaire d'une unité de commutation respective (56, 48) à l'étage de charge rapide (12) et à l'étage d'alimentation de retour (46), lequel comparateur de fréquence commande soit l'étage de charge réseau (12), soit l'étage d'alimentation de retour (46) en fonction d'un écart entre la fréquence de réseau et une valeur de seuil de fréquence prédéterminée par l'intermédiaire de l'unité de commutation respective (56, 48).

12. Système de charge selon la revendication 11, **caractérisé en ce que**, au-dessus d'une valeur de seuil de fréquence prédéterminée, l'étage de charge réseau (12) est mis en circuit et l'étage d'alimentation de retour (46) est mis hors circuit et **en ce que**, en dessous de la valeur de seuil de fréquence prédéterminée, l'étage d'alimentation de retour (46) est mis en circuit et l'étage de charge réseau (12) est mis hors circuit.

13. Système de charge selon la revendication 11 ou 12, **caractérisé en ce que** l'accumulateur tampon (16) est raccordé à un système de gestion de batterie (20) à des fins de commande du processus de charge et de surveillance, et à des fins d'ajustement de l'état de charge des cellules d'accumulateur individuelles (18).

14. Système de charge selon l'une quelconque des revendications 11 à 13, **caractérisé en ce que** l'étage d'alimentation de retour (46) comporte un convertisseur continu/continu (72) raccordé à l'accumulateur tampon (16), un transformateur à haute fréquence (74) raccordé à ce dernier et un pont de diodes (76) qui lui est relié, et **en ce que** le pont de diodes (76) peut être amené à passer par l'intermédiaire d'un condensateur de filtrage (79) raccordé à un pont de transistors (78) à la tension d'amplitude du réseau à courant alternatif (10) ayant la fréquence de réseau instantanée de ce dernier.

15. Système de charge selon l'une quelconque des revendications 11 à 14, **caractérisé en ce que** l'étage de charge d'alimentation de retour (46) peut être mis hors circuit lors d'un abaissement en dessous d'un état de charge limite prédéterminé de l'accumulateur tampon (16).

16. Système de charge selon l'une quelconque des revendications 11 à 15, **caractérisé en ce que** le raccordement de charge (24) comporte une connexion enfichable qui comporte au moins deux contacts de données (34', 34") reliés au dispositif de commande (38) et à un dispositif de contrôle (36) côté véhicule.

17. Système de charge selon la revendication 16, **caractérisé en ce que** le dispositif de contrôle (36) côté véhicule peut recevoir des signaux analogiques dépendant du courant et de la tension en provenance de l'accumulateur (26) du véhicule et les transmet sous forme numérique par l'intermédiaire des contacts de données (34', 34") au dispositif de commande (38) de l'étage de charge rapide (22) à des fins d'évaluation et de commande du convertisseur continu/continu (44).
